# EUROPEAN PATENT APPLICATION

(11) **EP 4 607 980 A1**
(43) Date of publication of application: **27.08.2025**
(21) Application number: 24382204.6
(22) Date of filing: 23.02.2024
(51) Int. Cl.: H04W 8/18, H04W 12/48

(54) **DEVICE-EUICC BINDING BASED ON DEVICE IDENTIFIER**

(71) Applicant: Giesecke+Devrient Mobile Security Germany GmbH, 81677 München (DE)
(72) Inventor: PATINO, David, 08820 EL Prat de Llobregat (Barcelona) (ES); TOTEV, Georgy, 08820 El Prat de Llobregat (Barcelona) (ES); RUAU, Federico, 08820 El Prat de Llobregat (Barcelona) (ES); TEJADA, Raul Lorente, 08820 El Prat de Llobregat (Barcelona) (ES); GIFRE, Clara, 08820 El Prat de Llobregat (Barcelona) (ES)
(74) Representative: LKGLOBAL Lorenz & Kopf Patentanwalt Attorney at Law PartG mbB

(57) **Abstract**

An eUICC, - hosting, or constructed for hosting, at least one security domain profile, ISD-P, the ISD-P hosting, or constructed for hosting, at least one subscriber profile; - storing pre-stored identification information of a device; - hosting a device-eUICC binding applet constructed to, after each reset of the eUICC; --- receive identification information provided by the device; --- compare the received identification information to the pre-stored identification information; --- when the received identification information corresponds to the pre-stored identification information, allow further operation of the eUICC; andwhen the received identification information doesn't correspond to the pre-stored identification information, disable the eUICC; **characterized by** - the received, pre-stored and compared identification information comprising at least two or more device identifiers of the device.

## Description

### Field of the invention

The present invention relates to device-eUICC binding based on a device identifier.

### Background of the invention and prior art

Mobile devices, which are understood to be devices having ability to communicate in a mobile network, or having the same meaning wireless network, of a mobile network operator, MNO, are operated with an embedded universal integrated circuit card, eUICC, holding one or several MNO owned profiles (subscriber profiles) enabling attachment to and authentication in the mobile network of the respective MNO. The mobile device is often referred to only as device, as compared to the eUICC hosted in the device. Sometimes, the (mobile) device is alternatively referred to as (mobile) terminal.

An eUICC hosts different security domains, including the issuer security domain root, ISD-R, and one or several issuer security domain(s) profile, ISD-P, also referred to as profile container(s). The ISD-R is the entry point to the eUICC via which a profile server, like the SM-DP+, can provision operational profiles to ISD-Ps of the eUICC. In some eUICCs, the ISD-R is implemented as a security domain with only a reduced data set, whereas in some eUICCs the ISD-R is implemented as a complete root profile.

For eUICCs/UICCs, different form factors are known, including plug-in UICC or SIM card being a removable chipcard hardware insertable to and removable from the mobile device, embedded UICC, eUICC in a strict sense being a SIM-card-like UICC constructed to be soldered into a mobile device, and integrated UICC, iUICC, incorporated into the chipset of the mobile device, without having an own hardware.

In applicable specifications directed to content management (provisioning) of eUICCs/ UICCs having ability to such content management (provisioning), throughout the term eUICC is used, and in connection with the invention, also the term eUICC will be used.

In connection with the present invention, an eUICC is understood to be embodied in any form factor, including plug-in, embedded (soldered in) and integrated, and to have capability for content management of the eUICC, e.g. by Remote and Local SIM Management.

Different types of mobile device are known, including consumer devices like smartphones or tablets or smartwatches, automotive devices designed to be used in motor powered vehicles, and loT devices designed to be operated in an industrial or smart home environment.

Different types of mobile devices have different security and performance capabilities. Consumer devices typically have high security and performance capabilities, whereas loT devices typically have only poor security and performance capabilities. Within the consumer devices, a smartphone may have higher security and/or performance capability as compared to a smartwatch.

For this and further reasons, for example, an eUICC dedicated to a consumer device like a smartphone or smartwatch shall not be operated in combination with an loT device, since the relatively simple and cheap loT device may be unable to provide the high security and performance capabilities that are assumed to be present at a consumer device. Also other combinations of a device and an eUICC which are not provided by the device or/and eUICC launching company may be unwanted.

Moreover, even different devices of the same type, such as two different smartphone models, can have different needs and security and performance capacities, such that running an eUICC in a smartphone for which it is not intended may lead to an increased risk of malfunctions and can be unwanted.

A dedicated mobile device and a dedicated eUICC are often sold in the market as a bundle, wherein the mobile device and the eUICC have a binding between each other, referred to as device-eUICC binding, and shall be operated together, however not the mobile device in combination with a different eUICC or the eUICC in combination with a different mobile device.

Abusive market participants or private persons might seek to insert a plug-in eUICC into a device not dedicated to be used with said device, or even to solder out soldered-in eUICC from a device and re-solder it into a different device. Irrespective of the form factor of the eUICC, there is a need to prevent circumventing the binding between a device and an eUICC desired by a party launching the eUICC or/and the device to the market.

From the prior art, different device-eUICC binding solutions are known.

Document US11805397B2 from the prior art discloses an eUICC-device binding method and corresponding apparatus, wherein an hardware identifier, international mobile equipment identifier IMEI value which is used to identify a wireless device with an MNO, is associated to an ICCID value of an eSIMS on an eUICC, so as to effect a binding between the eSIM on the eUICC and the wireless device.

The IMEI lock binding solution described in US11805397B2 binds the IMEI with the device, and is susceptible to be hacked, since one single device identifier, IMEI, only is involved.

Document US10812970B2 from the prior art discloses an eUICC-device binding solution, referred to as SIM-lock, to control network access associated with a wireless device, and to allow network access with the wireless device only if a host wireless device identification matches a stored wireless device identification, wherein the host and stored wireless device identification is one of several possible IDs, namely mobile equipment identifier MEID, international Mobile Station Equipment Identity IMEI, Electronic Serial Number ESN, or pseudo-ESN pESN.

The binding solution disclosed in US10812970B2 mentions further device ID that may be used instead of the IMEI to effect the eUICC-device binding. Nevertheless, also the further identifiers are susceptible to be hacked.

The document ETSI TS 102 223 V14.0.0 (2017-05), Smart Cards; Card Application Toolkit (CAT) (Release 14), 2017-05, from the prior art discloses commands for exchange of information between a UICC and a terminal. The commands apply particularly to the communication between an eUICC (as the UICC) and a mobile device (as the terminal). Chapter 5.2 describes the TERMINAL PROFILE command used to communicate to the UICC, and receive at the UICC from the terminal, CAT (Card Application Toolkit) facilities supported by the terminal. Part of the facilities comprised in the TERMINAL PROFILE information is the so-called local information. Another command described is the command PROVIDE LOCAL INFORMATION, by which the local information can be received at the UICC from the terminal. According to chapter 6.2, the terminal sends to the UICC an TERMINAL PROFILE during UICC initialization. After the terminal has sent the TERMINAL PROFILE to the UICC, further communication between the UICC and the terminal can follow.

### Objective of the invention

It is an object of the present invention to provide a device-eUICC binding solution which is secure and at the same time applicable to a broad range of use cases.

### Summary of the invention

The object of the invention is achieved by an eUICC with following features, according to claim 1. Embodiments of the invention are presented in dependent claims.

In greater detail, the object of the invention is achieved by an eUICC as follows. The eUICC hosts, or constructed for hosting, at least one security domain profile, ISD-P, the ISD-P hosting, or constructed for hosting, at least one subscriber profile. The eUICC stores pre-stored identification information of a device. The eUICC hosts a device-eUICC binding applet. The binding applet is constructed to, after each reset of the eUICC, receive from the device identification information provided by the device. The binding applet compares the received identification information to the pre-stored identification information. When the received identification information corresponds to the pre-stored identification information, the device and the eUICC are identified as being in a device-eUICC binding and further operation of the eUICC is allowed. When the received identification information doesn't correspond to the pre-stored identification information, the device and the eUICC are identified as not being in a device-eUICC binding and the eUICC is disabled. The eUICC is characterized by the received, pre-stored and compared identification information comprising at least two or more device identifiers of the device.

In that not only one device identifier is used for the device-eUICC binding, but two or more device identifiers are used, hacking the device-eUICC binding is severely impeded. Nevertheless, no additional complex infrastructure is required, making the solution broadly applicable. Since the method is operated by the binding applet installed in the eUICC, the device isn't required to have any additional functionalities. For generating the device fingerprint, a fingerprint generation algorithm is required. However, during installing and verification of the binding, no highly-complex cryptography is required.

Accordingly, the present solution provides a device-eUICC binding solution which is secure and at the same time applicable to a broad range of use cases.

According to some preferred embodiments, the eUICC hosts a device fingerprint generator comprising a fingerprint algorithm. Said device fingerprint generator is constructed to generate, by processing said two or more device identifiers with said fingerprint algorithm, a device fingerprint. The device fingerprint merges the two or more distinct device identifiers into one single representative value which is both representative for the two or more device identifiers on the one hand, and easy to handle on the other hand. Also, the pre-stored identification information is stored in the form of a pre-stored device fingerprint which was generated by processing said two or more device identifiers with said fingerprint algorithm. For comparing the received and pre-stored identification information, from the received two or more device identifiers and with said fingerprint algorithm, a device fingerprint is generated and is compared to the pre-stored device fingerprint.

The received, pre-stored and compared at least two or more identifiers may be selected from: IMEl, IMEISV, ESN, MEID, one or several facilities supported by the terminal as indicated in the TERMINAL PROFILE, local information as indicated in the PROVIDE LOCAL INFORMATION response, or any similar identifier available in the device.

The received, pre-stored and compared at least two or more identifiers may comprise:
- at least one device identifier selected from: IMEl, IMEISV, ESN, MEID; and
- at least one device identifier which is selected from: a facility supported by the terminal as indicated in the TERMINAL PROFILE or/and a local information as indicated in the PROVIDE LOCAL INFORMATION.

Due to usage of identification information which is a combination of device identifiers from two or three different sources, 1) the hardware identifiers, 2) the TERMINAL PROFILE facility information, 3) the local information from the PROVIDE LOCAL INFORMATION response, complexity is added to the identification information, which makes it harder to hack the identification information, as compared to using only one identifier like IMEI as the identification information.

A method for installing a device-eUICC binding between an eUICC and a target device is based on an eUICC hosting, or constructed for hosting, at least one security domain profile, ISD-P, the ISD-P hosting, or constructed for hosting, at least one subscriber profile, and hosting a device-eUICC binding applet.

The method comprises following step:
- taking into operation the eUICC in the target device and resetting the eUICC;
- running the device-eUICC binding applet, comprising:
   --- receive identification information provided by the target device;
   --- store the received identification information as pre-stored identification information of the device.

The method is characterized in that the received and pre-stored identification information comprising at least two or more device identifiers of the target device.

In that not only one device identifier is used for the device-eUICC binding, but two or more device identifiers are used, hacking the device-eUICC binding is severely impeded. Nevertheless, no additional complex infrastructure is required, making the solution broadly applicable.

According to some embodiments, the eUICC further hosts a device fingerprint generator comprising a fingerprint algorithm. In such embodiments, the method of installing a device-eUICC binding further comprises: - a step of generating a pre-stored device fingerprint, by processing said two or more device identifiers with said fingerprint algorithm so as to generate said pre-stored device fingerprint; - storing the pre-stored identification information in the form of said generated pre-stored device fingerprint.

Due to the merger of the two or more device identifiers into one single device fingerprint, the method for installing the device-eUICC binding requires additional effort during its installation, however produces a binding which is subsequently, during verifying the binding, particularly easy to handle. Since the method is operated by the binding applet installed in the eUICC, the device isn't required to have any additional functionalities.

According to some embodiments, the method to install the binding may further comprise, upon running the device-eUICC binding applet, an examination if pre-stored identification information is already stored in the eUICC. In case no pre-stored local information is stored in the eUICC, the method for installing a device-eUICC binding is continued. In case it is detected (by the binding applet) that pre-stored identification information is stored in the eUICC, the method may continue with either one or several of the following: --- abort the method for installing a device-eUICC binding; --- prompt to a user of the device to input a decision if to install a new device-eUICC binding or to verify a device-eUICC binding; --- execute a method for verifying a device-eUICC binding.

According to some embodiments, installing the device-eUICC binding is enabled only upon the first power-up of the eUICC in a device, and is disabled upon any subsequent power-up of the same eUICC in any device.

A method for verifying a device-eUICC binding between an eUICC and a device is based on an eUICC hosting, or constructed for hosting, at least one security domain profile, ISD-P, the ISD-P hosting, or constructed for hosting, at least one subscriber profile. The eUICC further hosts a device-eUICC binding applet. Further, the eUICC stores pre-stored identification information of a target device. The pre-stored identification information may have been stored to the eUICC by a method as described above.

The method for verifying a device binding comprises:
- taking into operation the eUICC in the device and resetting the eUICC;
- running the device-eUICC binding applet, comprising:
   --- receive identification information provided by the device;
   --- compare the received identification information to the pre-stored identification information;
   --- when the received identification information corresponds to the pre-stored identification information, the device and the eUICC are identified as being in a device-eUICC binding, and allow further operation of the eUICC; and
   --- when the received identification information doesn't correspond to the pre-stored identification information, the device and the eUICC are identified as being in a device-eUICC binding, and disable the eUICC.

The method is characterized in that the received and pre-stored identification information comprising at least two or more device identifiers of the device.

By being based on two or more device identifiers, the method provides enhanced security. Since the method is operated by the binding applet installed in the eUICC, the device isn't required to have any additional functionalities.

The step of receiving identification information may comprise or be incorporated into:
- receive at the eUICC, from the device, a TERMINAL PROFILE; or/and
- receive at the eUICC, from the device, a PROVIDE LOCAL INFORMATION response.

In other words, some of the identification information used to verify the device-eUICC binding may be exchanged between the device and the eUICC by a TERMINAL PROFILE CAT command sent from the device to the eUICC and received at the eUICC, and/or some of the identification information used to verify the device-eUICC binding may be exchanged between the device and the eUICC by a PROVIDE LOCAL INFORMATION response sent from the device to the eUICC and received at the eUICC. The PROVIDE LOCAL INFORMATION response may be sent in response to a PROVIDE LOCAL INFORMATION command sent from the eUICC to the device before said response.

The invention provides a device hosting an eUICC according to the present invention, a device-eUICC binding being provided between the device and the eUICC in case the correct device and eUICC are operated together.

The invention provides a system comprising a device and at least one mobile network, the system constructed to allow attachment of the device to the mobile network when the device and the eUICC are in a device-eUICC binding, and to disallow attachment of the device to the mobile network when the device and the eUICC are not in a device-eUICC binding.

The invention provides a computer readable medium having installed code when executed performing a method for installing a device-eUICC binding. The invention provides a computer readable medium having installed code when executed performing a method for verifying a device-eUICC binding.

### Brief description of the drawings

Embodiments of the invention will now be described with reference to the accompanying drawings, throughout which like parts are referred to by like references, and in which represents:
- Fig. 1: a method for installing a device-eUICC binding, according to an embodiment of the invention;
- Fig. 2: a method for verifying a device-eUICC binding, according to an embodiment of the invention.

### Detailed description of the invention

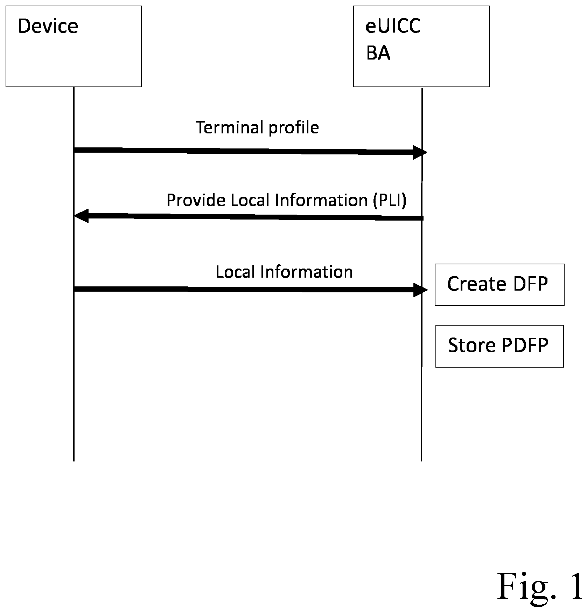

Fig. 1 shows a method for installing a device-eUICC binding, according to an embodiment of the invention. The eUICC hosts, or is constructed for hosting, one or several security domain profile, ISD-P, constructed for receiving subscriber profiles. Further, the eUICC hosts a binding applet BA.

The process according to Fig. 1 is the following:
1- Terminal profile: the device informs the eUICC about its own capabilities (bitmask) during the first power up.
2- Provide Local Information (PLI) is requested by the eUICC to the device, and the requested local information is sent from the device to the eUICC, including IMEI, IMEISV, ESN, MEID or any similar identifier available in the device. It must be noted that this solution might have different embodiments depending on the kind of identifier available in the device. Not all devices share the same kind of information.
3- The eUICC generates a device fingerprint using the combined information between the terminal profile and the provided identifiers, herein applying a fingerprint generation algorithm, and stores the generated fingerprint as pre-stored device fingerprint PDFP for subsequent verification.

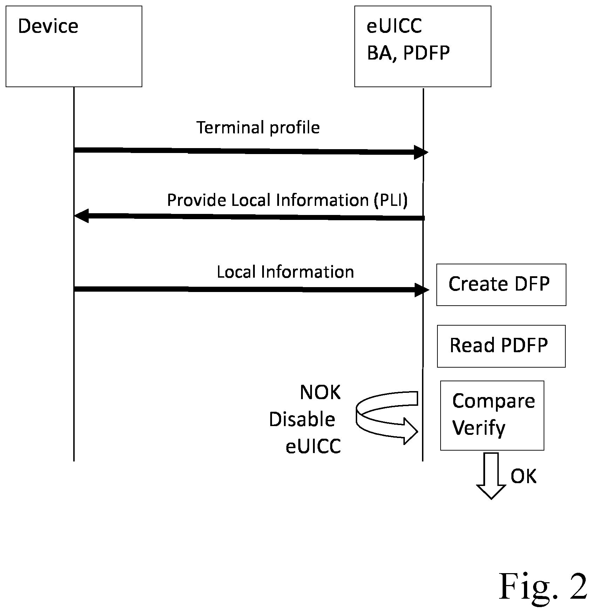

Fig. 2 shows a method for verifying a device-eUICC binding, according to an embodiment of the invention. The eUICC hosts hosts, or is constructed for hosting, one or several security domain profile, ISD-P, constructed for receiving subscriber profiles. Further, the eUICC hosts a binding applet BA. In addition, a pre-stored device fingerprint PDFP is stored in the device. The pre-stored device fingerprint PDFP may have been stored into the device by the method shown in Fig. 1 or a similar method.
1- Terminal profile: the device informs the eUICC about its own capabilities (bitmask) during power up.
2- Provide Local Information (PLI) is requested by the eUICC to the device, and the requested local information is sent from the device to the eUICC, including IMEl, IMEISV, ESN, MEID or any similar identifier available in the device. It must be noted that this solution might have different embodiments depending on the kind of identifier available in the device. Not all devices share the same kind of information.
3- The eUICC generates a device fingerprint DFP using the combined information between the terminal profile and the provided identifiers, herein applying a fingerprint generation algorithm, retrieves the pre-stored device fingerprint PDFP from the eUICC storage, and compares the generated device fingerprint DFP and the pre-stored device fingerprint PDFP with each other. In case of match, the eUICC is further operated. In case of a mismatch, the eUICC is disabled.
4- For any other subsequent startup, the same sequence is performed and the fingerprint is validated against the one stored on the first boot. In case it does not match, the eUICC is disabled.

### Cited documents

US10812970B2
US11805397B2
ETSI TS 102 223 V14.0.0 (2017-05), Smart Cards; Card Application Toolkit (CAT) (Release 14), 2017-05

## Claims

1. An eUICC,
- hosting, or constructed for hosting, at least one security domain profile, ISD-P, the ISD-P hosting, or constructed for hosting, at least one subscriber profile;
- storing pre-stored identification information of a device;
- hosting a device-eUICC binding applet (BA) constructed to, after each reset of the eUICC;
--- receive at the eUICC identification information provided by the device;
--- compare the received identification information to the pre-stored identification information;
--- when the received identification information corresponds to the pre-stored identification information, identify the device and the eUICC in a device-eUICC binding and allow further operation of the eUICC; and
--- when the received identification information doesn't correspond to the pre-stored identification information, identify the device and the eUICC not in a device-eUICC binding and disable the eUICC;
**characterized by**
- the received, pre-stored and compared identification information comprising at least two or more device identifiers of the device.

2. The eUICC according to claim 1, **further characterized by**
- the eUICC hosting a device fingerprint generator comprising a fingerprint algorithm, and constructed to generate, by processing said at least two or more device identifiers with said fingerprint algorithm, a device fingerprint (DFP);
- the pre-stored identification information being stored in the form of a pre-stored device fingerprint (PDFP) which was generated by processing said at least two or more device identifiers with said fingerprint algorithm;
- for comparing the received and pre-stored identification information, from the received two or more device identifiers and with said fingerprint algorithm, a device fingerprint (DFP) is generated and is compared to the pre-stored device fingerprint (PDFP).

3. The eUICC according to claim 1 or 2, wherein the received, pre-stored and compared at least two or more identifiers are selected from: IMEI, IMEISV, ESN, MEID, one or several facilities supported by the terminal as indicated in the TERMINAL PROFILE, local information as indicated in the PROVIDE LOCAL INFORMATION response, or any similar identifier available in the device.

4. The eUICC according to any of claims 1 to 3, wherein the received, pre-stored and compared at least two or more identifiers comprise:
- at least one device identifier selected from: IMEI, IMEISV, ESN, MEID; and
- at least one device identifier which is selected from: a facility supported by the terminal as indicated in the TERMINAL PROFILE or/and a local information as indicated in the PROVIDE LOCAL INFORMATION.

5. A method for installing a device-eUICC binding between an eUICC and a target device;
- the eUICC hosting, or constructed for hosting, at least one security domain profile, ISD-P, the ISD-P hosting, or constructed for hosting, at least one subscriber profile;
- the eUICC hosting a device-eUICC binding applet (BA);
the method comprising:
- taking into operation the eUICC in the target device and resetting the eUICC;
- running the device-eUICC binding applet (BA), comprising:
--- receive identification information provided by the target device;
--- store the received identification information as pre-stored identification information of the device;
**characterized by**
- the received and pre-stored identification information comprising at least two or more device identifiers of the target device.

6. The method according to claim 5, **further characterized by**
- the eUICC hosting a device fingerprint generator comprising a fingerprint algorithm;
- a step of generating a pre-stored device fingerprint (DFP), by processing said two or more device identifiers with said fingerprint algorithm so as to generate said pre-stored device fingerprint (PDFP);
- storing the pre-stored identification information in the form of said generated pre-stored device fingerprint (PDFP).

7. The method according to claim 5 or 6, further comprising
- upon running the device-eUICC binding applet (BA), examine if pre-stored identification information is stored in the eUICC;
- in case no pre-stored local information is stored in the eUICC, continue the method for installing a device-eUICC binding;
- in case pre-stored identification information is stored in the eUICC, continue with either one or several of the following:
--- abort the method for installing a device-eUICC binding;
--- prompt to a user of the device to input a decision if to install a new device-eUICC binding or to verify a device-eUICC binding;
--- execute a method for verifying a device-eUICC binding.

8. The method according to any of claims 5 to 7, wherein installing the device-eUICC binding is enabled upon the first power-up of the eUICC in a device, and is disabled upon any subsequent power-up of the same eUICC in any device.

9. A method for verifying a device-eUICC binding between an eUICC and a device;
- the eUICC hosting, or constructed for hosting, at least one security domain profile, ISD-P, the ISD-P hosting, or constructed for hosting, at least one subscriber profile;
- the eUICC hosting a device-eUICC binding applet (BA);
- the eUICC storing pre-stored identification information of a target device;
the method comprising:
- taking into operation the eUICC in the device and resetting the eUICC;
- running the device-eUICC binding applet (BA), comprising:
--- receive at the eUICC identification information provided by the device;
--- compare the received identification information to the pre-stored identification information;
--- when the received identification information corresponds to the pre-stored identification information, identify the device and the eUICC in a device-eUICC binding and allow further operation of the eUICC; and
--- when the received identification information doesn't correspond to the pre-stored identification information, identify the device and the eUICC not in a device-eUICC binding and disable the eUICC;
**characterized by**
- the received and pre-stored identification information comprising at least two or more device identifiers of the device.

10. The method according to claim 9, **further characterized by**
- the eUICC hosting a device fingerprint generator comprising a fingerprint algorithm;
- a step of generating a device fingerprint (DFP), by processing said received two or more device identifiers with said fingerprint algorithm so as to generate said device fingerprint (DFP);
- the pre-stored identification information being stored in the form of a pre-stored device fingerprint (PDFP) which was generated by processing said two or more device identifiers with said fingerprint algorithm;
- for comparing the received and pre-stored identification information, from the received two or more device identifiers and with said fingerprint algorithm, a device fingerprint (DFP) is generated and is compared to the pre-stored device fingerprint (PDFP).

11. The method according to any of claims 5 to 10, the eUICC being embodied according to any of claims 1 to 4.

12. The method according to any of claims 5 to 11, wherein the step of receiving identification information comprises or is incorporated into:
- receive at the eUICC, from the device, a TERMINAL PROFILE; or/and
- receive at the eUICC, from the device, a PROVIDE LOCAL INFORMATION response.

13. A device hosting an eUICC according to any of claims 1 to 4.

14. A system comprising a device according to claim 13 and at least one mobile network, the system constructed to allow attachment of the device to the mobile network when the device and the eUICC are in a device-eUICC binding, and to disallow attachment of the device to the mobile network when the device and the eUICC are not in a device-eUICC binding.

15. A computer readable medium having installed code when executed performing a method according to any of claims 5 to 12.
